# EUROPEAN PATENT APPLICATION

(11) **EP 4 642 018 A1**
(43) Date of publication of application: **29.10.2025**
(21) Application number: 25171545.4
(22) Date of filing: 22.04.2025
(51) Int. Cl.: H04N 1/00

(54) **IMAGE FORMING APPARATUS**

(30) Priority: 25.04.2024 JP 2024071249
(71) Applicant: KYOCERA Document Solutions Inc., Osaka-shi, Osaka 540-8585 (JP)
(72) Inventor: MINAMOTO, Riku, Osaka-shi, Osaka, 540-8585 (JP)
(74) Representative: Kurig, Thomas

(57) **Abstract**

An image forming apparatus (100) includes a main body (20), a display operation part (19), a housing (21), an NFC circuit (31), a wireless LAN circuit (32), and a control part 82). The main body (20) forms an image. The display operation part (19) displays information and receives operation. The housing (21) is coupled to a front surface of the main body (20) and houses the display operation part (19). The NFC circuit (31) performs NFC communication with a portable terminal (40). The wireless LAN circuit (32) performs wireless LAN communication with the portable terminal (40). The control part (2) transmits and receives data to and from the portable terminal (40) via the wireless LAN circuit (32) after establishing a connection with the portable terminal (40) via the NFC circuit (31). The NFC circuit (31) is housed in a left portion of the housing (21).

## Description

### BACKGROUND

The present disclosure relates to an image forming apparatus.

An image forming apparatus provided with a function of performing wireless communication with a portable terminal such as a smartphone or a tablet is known. For example, the image forming apparatus is provided with functions of a printing device and a scanner, and may be used for printing an image photographed by a portable terminal by the printing device, or for viewing an image read by the scanner by a portable terminal. Data can be exchanged between the portable terminal and the image forming apparatus using wired communication or a USB (Universal Serial Bus) memory, but when the portable terminal and the image forming apparatus is provided with a communication function via a wireless LAN (Local Area Network), the wireless LAN is more convenient.

As for the wireless LAN connection method, if an access point is installed near the image forming apparatus, it is possible to connect via the access point, but the access point is not necessarily installed anywhere. An image forming apparatus provided with a function of an access point is known, but in any case, several operations such as entering an SSID (Service Set Identifier) and a password are required. Communication in an ad hoc mode without using an access point is also possible, but the operation is complicated. Therefore, use of NFC (Near Field Communication) can be considered (see JP2014-106481, JP2017-154374, and JP2017-28477). A wireless LAN can be connected simply by holding a portable terminal over the NFC circuit provided in the image forming apparatus.

JP2014-106481 discloses a configuration in which an antenna faces the upper surface of the cover covering the image forming part, however, since the antenna is disposed on the left side of a loading part and an operation panel is disposed on the right side of the loading part, when viewing both the operation panel and the portable terminal, it is necessary to move the line of sight between the left side and the right side of the loading part, which is inconvenient. JP2017-154374 and JP2017-28477 discloses a configuration in which the antenna is disposed on the upper side or the lower side of a touch panel, it is necessary to move the line of sight in the upper-and-lower direction, which is inconvenient. In addition, in the configuration disclosed in JP2017-28477, the touch panel is obscured by the hand holding the portable terminal, reducing operability.

### SUMMARY

An image forming apparatus according to the present disclosure includes a main body, a display operation part, a housing, an NFC circuit, a wireless LAN circuit, and a control part. The main body forms an image. The display operation part displays information and receives operation. The housing is coupled to a front surface of the main body and houses the display operation part. The NFC circuit performs NFC communication with a portable terminal. The wireless LAN circuit performs wireless LAN communication with the portable terminal. The control part transmits and receives data to and from the portable terminal via the wireless LAN circuit after establishing a connection with the portable terminal via the NFC circuit. The NFC circuit is housed in a left portion of the housing.

### BRIEF DESCRIPTION OF THE DRAWINGS

FIG. 1 is a perspective view showing an external appearance of an image forming apparatus according to one embodiment of the present disclosure.
FIG. 2 is a front view schematically showing an internal structure of the image forming apparatus according to the embodiment of the present disclosure.
FIG. 3 is a perspective view showing a main body and a display operation part according to the embodiment of the present disclosure.
FIG. 4 is a perspective view showing the main body and the display operation part according to the embodiment of the present disclosure.
FIG. 5 is a perspective view showing an inside of the display operation part according to the embodiment of the present disclosure.
FIG. 6 is a perspective view showing a state of holding a portable terminal over the display operation part according to the embodiment of the present disclosure.
FIG. 7 is a plan view schematically showing a configuration of communication between the image forming apparatus and the portable terminal according to the embodiment of the present disclosure.
FIG. 8 is a right side view schematically showing the configuration of communication between the image forming apparatus and the portable terminal according to the embodiment of the present disclosure.
FIG. 9 is a perspective view showing a modified example of the embodiment of the present disclosure.

### DETAILED DESCRIPTION

Hereinafter, an image forming apparatus 100 according to an embodiment of the present disclosure will be described with reference to the drawings.

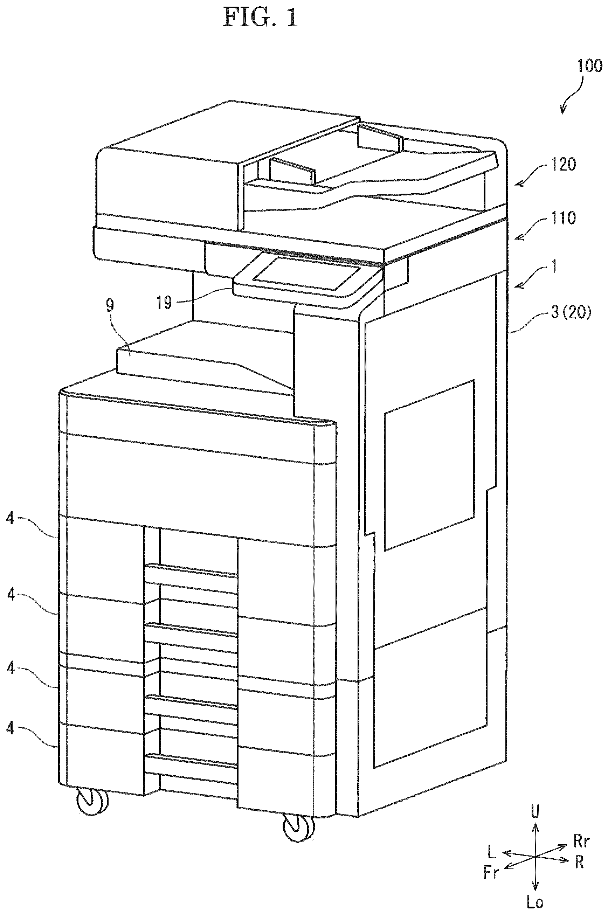

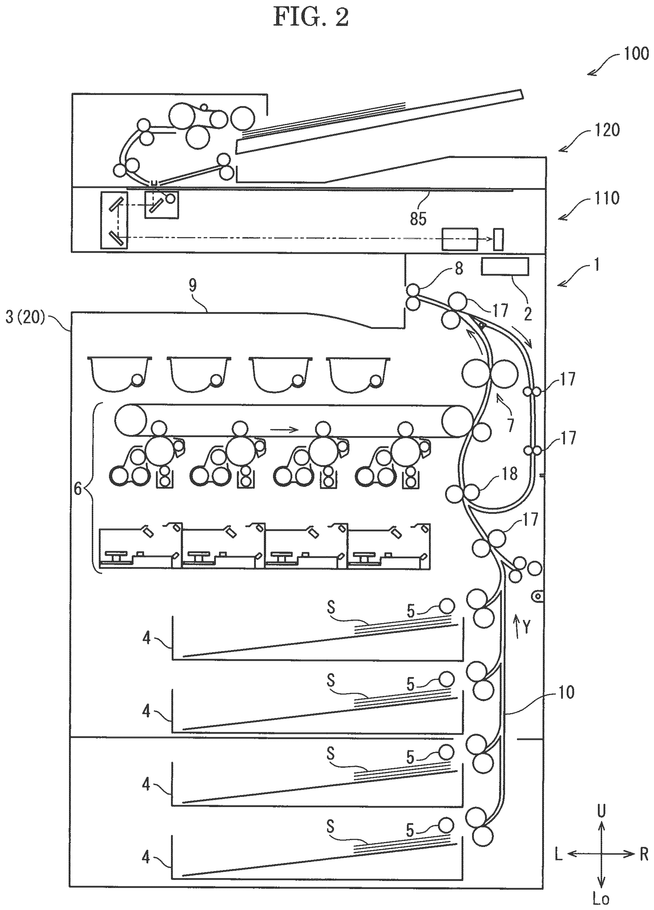

First, the entire structure of the image forming apparatus 100 will be described. FIG. 1 is a perspective view showing an external appearance of the image forming apparatus 100. FIG. 2 is a front view schematically showing an internal structure of the image forming apparatus 100. Hereinafter, the front side of the paper plan on which FIG. 2 is drawn is defined as the front side of the image forming apparatus 100, and the left-and-right direction will be described with reference to the direction in which the image forming apparatus 100 is viewed from the front side. In each figure, U, Lo, L, R, Fr, and Rr indicate the upper, lower, left, right, front, and rear, respectively.

The image forming apparatus 100 includes a printing device 1, a document reading device 110, and a document conveying device 120. The document reading device 110 is provided above the printing device 1, and the document conveying device 120 is provided above the document reading device 110. The document conveying device 120 conveys a document along a conveyance path through a reading position of the document reading device 110. The document reading device 110 is a flatbed type image scanner, and reads the document to generate image data. The printing device 1 forms an image based on the image data on a sheet S.

The printing device 1 includes a rectangular parallelepiped main body housing 3. In the lower portion in the main body housing 3, a sheet feeding cassette 4 which stored the sheet S and a sheet feeding roller 5 which feeds the sheet S rightward from the sheet feeding cassette 4 are provided. Above the sheet feeding cassette 4, an image forming device 6 which forms a toner image in an electrophotographic manner is provided, and a fixing device 7 which fixes the toner image on the sheet S is provided above the image forming device 6. Above the fixing device 7, a discharge roller 8 which discharges the sheet S on which the toner image is fixed and a discharge tray 9 on which the discharged sheet S is loaded are provided. The document reading device 110 is provided on the uppermost portion of the main body housing 3, and a contact glass 85 is exposed. The printing device 1 may be a device for forming an image by an inkjet manner.

Inside the main body housing 3, a conveyance path 10 extending from the sheet feeding roller 5 to the discharge roller 8 through the image forming device 6 and the fixing device 7 is provided. The conveyance path 10 is formed mainly of plate-like members facing each other with a gap for passing the sheet S, and conveyance rollers 17 for holding and conveying the sheet S are provided at a plurality of positions in the conveyance direction Y. A registration roller 18 is provided on the upstream side of the image forming device 6 in the conveyance direction Y.

A control part 2 includes an arithmetic part and a storage part. The arithmetic part is, for example, a CPU (Central Processing Unit). The storage part includes a storage medium such as ROM (Read Only Memory), RAM (Random Access Memory), and EEPROM (Electrically Erasable Programmable Read Only Memory). The arithmetic part reads and executes control program stored in the storage part to perform various processes. The control part 2 may be implemented only by an integrated circuit without using software.

A display operation part 19 is provided on the front side of the document reading device 110. The display operation part 19 includes a display panel 22, a touch panel 23 superposed on the display surface of the display panel 22, and a keypad 24 adjacent to the display panel 22. The control part 2 causes the display panel 22 to display a screen showing an operation menu, a status, or the like of the printing device 1 and the document reading device 110, and controls each part of the printing device 1 and the document reading device 110 according to an operation detected by the touch panel 23 and the keypad 24.

The basic image forming operation of the printing device 1 is as follows. When a print job is input to the printing device 1 from an external computer or the like, the sheet feeding roller 5 feeds the sheet S from the sheet feeding cassette 4 to the conveyance path 10, the registration roller 18 whose rotation is stopped corrects the skew of the sheet S, and the registration roller 18 feeds the sheet S to the image forming device 6 at a predetermined timing. The image forming device 6 forms a toner image and transfers it to the sheet S. Subsequently, the fixing device 7 fixes the toner image on the sheet S, and the discharge roller 8 discharges the sheet S to the discharge tray 9.

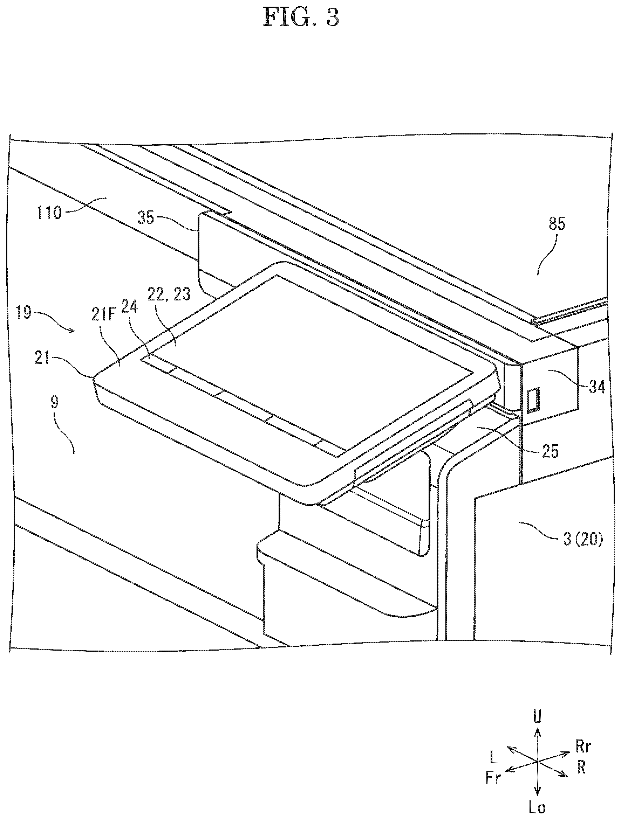

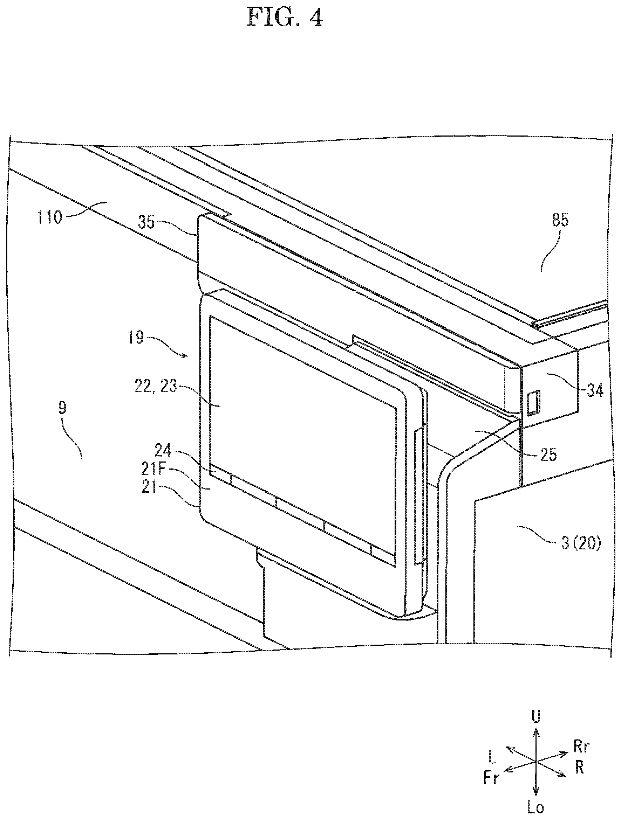

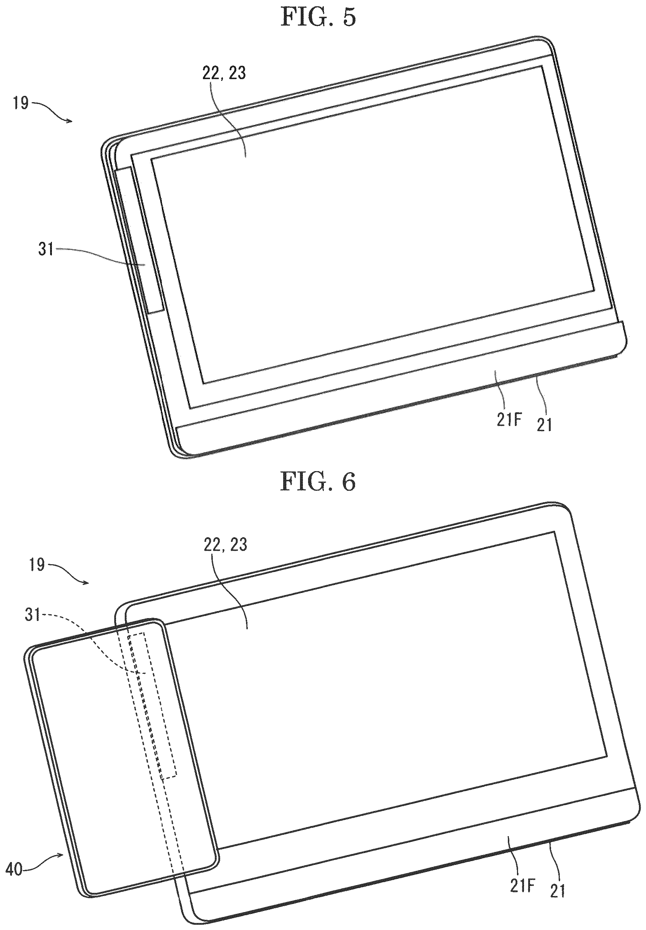

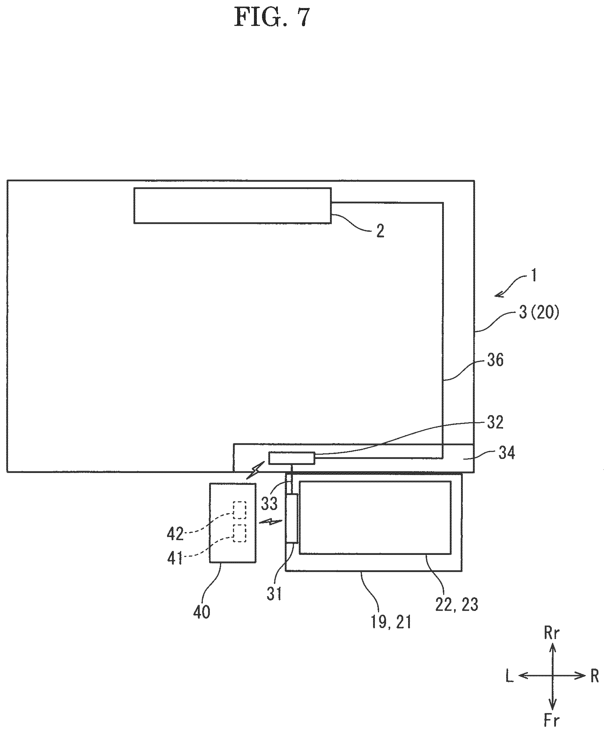

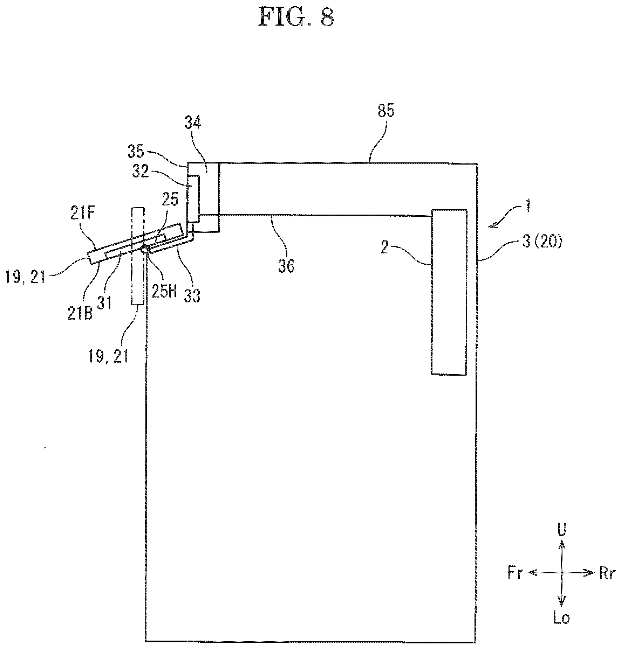

Next, a communication means provided in the image forming apparatus 100 will be described. FIG. 3 and FIG. 4 are perspective views showing a main body 20 and the display operation part 19. FIG. 5 is a perspective view showing an inside of the display operation part 19. FIG. 6 is a perspective view showing a state holding the portable terminal 40 over the display operation part 19. FIG. 7 is a plan view schematically showing a configuration of communication between the image forming apparatus 100 and the portable terminal 40. FIG. 8 is a right side view schematically showing the configuration of communication between the image forming apparatus 100 and the portable terminal 40.

The image forming apparatus 100 includes a main body 20 which forms an image, the display operation part 19 which displays information and receives operation, a housing 21 coupled to the front surface of the main body 20 and housing the display operation part 19, an NFC circuit 31 which performs NFC communication with a portable terminal 40, a wireless LAN circuit 32 which performs wireless LAN communication with the portable terminal 40, and the control part 2 which transmits and receives data to and from the portable terminal 40 via the wireless LAN circuit 32 after establishing a connection with the portable terminal 40 via the NFC circuit 31, wherein the NFC circuit 31 is housed in the left portion of the housing 21.

[Display Operation Part] The image forming apparatus 100 includes the main body 20 and the display operation part 19 (see FIG. 3, FIG. 4, FIG. 7 and FIG. 8). The main body 20 includes the aforementioned main body housing 3 and all components provided in the main body housing 3. The display operation part 19 is housed in the housing 21 separate from the main body housing 3. The housing 21 is formed in a flat rectangular parallelepiped shape. Of the two widest surfaces of the housing 21, the surface facing the user is referred to as a front surface 21F, and the surface opposite to the front surface 21F is referred to as a rear surface 21B (see FIG. 8). The display panel 22, the touch panel 23 and the keypad 24 are provided on the front surface 21F.

The front surface of the document reading device 110 (see FIG. 3 and FIG. 4) is positioned a few centimeters behind the front surface of the printing device 1. The surface connecting the right end portion of the front surface of the printing device 1 and the right end portion of the front surface of the document reading device 110 is inclined such that the rear portion is higher than the front portion. The inclined surface is a support part 25 which supports the display operation part 19. The rear surface 21B of the housing 21 is coupled to the support part 25 via a hinge 25H (see FIG. 8) whose axial direction is along the left-and-right direction, so that a posture of the housing 21 can be changed relative to the main body housing 3. Typically, the display operation part 19 is used in a posture in which the front surface 21F is inclined so that the front portion is slightly lower than the rear portion (see FIG. 3). When the front portion of the housing 21 is pushed downward, the front surface 21F faces forward (see FIG. 4), making it easier for the user with a low eye position (such as the user using a wheelchair) to operate the display operation part 19.

[NFC Circuit] The NFC circuit 31 (see FIG. 5 to FIG. 8) has a function of a reader/writer which reads/writes to a non-contact integrated circuit tag 41 (see FIG. 7) of the portable terminal 40 described later, for example, in a communication system conforming to ISO (International Organization for Standardization) / IEC (International Electrotechnical Commission) 18092 (NFC IP-1).

The NFC circuit 31 is disposed on the left side surface side of the inside of the housing 21. The NFC circuit 31 is preferably disposed on the left side of the touch panel 23 when viewed from the front surface 21F side of the housing 21.

The communication by NFC is performed by the user holding the portable terminal 40 over the NFC circuit 31. A position of the NFC circuit 31 is shown on the front surface 21F side of the housing 21 so as to be visible to the user. For example, the character string "NFC" may be printed, pasted, or stamped on the left side of the touch panel 23 on the front surface 21F of the housing 21, or an image of the character string "NFC" may be displayed near the left edge of the display panel 22.

[Wireless LAN Circuit] A housing part 34 (see FIG. 2, FIG. 4, FIG. 7 and FIG. 8) in which the wireless LAN circuit 32 is housed is provided on the right portion of the front surface of the document reading device 110. The housing part 34 is a generally rectangular parallelepiped space which is elongated in the left-and-right direction and whose front surface is opened, and a detachable cover 35 is provided in the front side thereof. The wireless LAN circuit 32 is mounted behind the NFC circuit 31. The wireless LAN circuit 32 is, for example, a communication interface for performing communication in a communication system conforming to the IEEE (Institute of Electrical and Electronics Engineers) 802.11 series. The wireless LAN circuit 32 is connected to the control part 2 by a signal line 36.

The NFC circuit 31 and the wireless LAN circuit 32 are connected by a signal line 33 such as a USB cable. The NFC circuit 31 and the wireless LAN circuit 32 are connected to each other by using the signal line 33 having a length enough so as not to cause communication failure due to the influence of noise generated from the main body 20. A length L of the signal line 33 is preferably 10 cm or less.

[Control Part] The control part 2 described above is provided, for example, behind the discharge tray 9 in order to suppress the influence of heat from the image forming device 6, the fixing device 7, and the like. The control part 2 and the wireless LAN circuit 32 are connected by the signal line 36.

[Portable Terminal] The portable terminal 40 (see FIG. 6 and FIG. 7) is a mobile phone such as a smartphone or a feature phone, a tablet terminal, or the like. The portable terminal 40 is provided with, for example, a non-contact IC tag 41 conforming to ISO/IEC 14443. The portable terminal 40 is provided with, for example, a wireless LAN circuit 42 for performing communication in a communication system conforming to the IEEE 802.11 series.

The NFC circuit 31 provided in the display operation part 19 emits radio wave for communication with the portable terminal 40. A communicable distance D between the NFC circuit 31 and the non-contact IC tag 41 is 10 cm or less. When the user holds the portable terminal 40 over the NFC circuit 31 at an interval of 10 cm or less, the non-contact IC tag 41 receives the radio wave from the NFC circuit 31. Then, the non-contact IC tag 41 emits reflected wave, and the NFC circuit 31 receives the reflected wave. The NFC circuit 31 transmits a physical address of the wireless LAN circuit 32 of the image forming apparatus 100 to the non-contact IC tag 41. The non-contact IC tag 41 transmits a physical address of the wireless LAN circuit 42 of the portable terminal 40 with the physical address of the wireless LAN circuit 32 of the image forming apparatus 100 as a destination. Thus, the wireless LAN circuit 42 of the portable terminal 40 and the wireless LAN circuit 32 of the image forming apparatus 100 mutually the physical addresses to establish a connection via the wireless LAN.

When transmitting data from the portable terminal 40 to the image forming apparatus 100, the portable terminal 40 transmits the data from the wireless LAN circuit 42 of the portable terminal 40 with the physical address of the wireless LAN circuit 32 of the image forming apparatus 100 as a destination. On the other hand, when data is transmitted from the image forming apparatus 100 to the portable terminal 40, the control part 2 transmits the data from the wireless LAN circuit 32 of the image forming apparatus 100 with the physical address of the wireless LAN circuit 42 of the portable terminal 40 as a destination.

The image forming apparatus 100 according to the present embodiment described above includes the main body 20 which forms an image, the display operation part 19 which displays information and receives operation, the housing 21 which is coupled to the front surface of the main body 20 and houses the display operation part 19, the NFC circuit 31 which performs NFC communication with the portable terminal 40, the wireless LAN circuit 32 which performs wireless LAN communication with the portable terminal 40, and the control part 2 which transmits and receives the data to and from the portable terminal 40 via the wireless LAN circuit 32 after establishing the connection with the portable terminal 40 via the NFC circuit 31, and the NFC circuit 31 is housed in the left portion of the housing 21.

According to the present embodiment, when data is exchanged between the portable terminal 40 and the image forming apparatus 100, a connection is established by holding the portable terminal 40 over the left portion of the display operation part 19. Since the display operation part 19 and the portable terminal 40 are at the same height when seen from the user, it is unnecessary to move the line of sight in the upper-and-lower direction, and visibility is improved. Further, since a right-handed user can hold the portable terminal 40 with his left hand and operate the portable terminal 40 and the display operation part 19 with his right hand, operability is improved. Therefore, according to the present embodiment, it is possible to improve the visibility and operability between the display operation part 19 of the image forming apparatus 100 and the portable terminal 40 when using short-range wireless communication.

According to the image forming apparatus 100 according to the present embodiment, the NFC circuit 31 is disposed on the left side of the screen of the display operation part 19. According to this embodiment, when the portable terminal 40 is held over the NFC circuit 31, an overlap between the portable terminal 40 and the screen of the display operation part 19 is suppressed, so that the visibility and operability can be further improved.

In addition, according to the image forming apparatus 100 according to the present embodiment, the NFC circuit 31 and the wireless LAN circuit 32 are connected by using the signal line 33 having a length enough to prevent communication interference due to the influence of noise generated from the main body 20. According to the present embodiment, a reliability of the wireless LAN connection between the portable terminal 40 and the image forming apparatus 100 using NFC can be improved.

According to the image forming apparatus 100 according to the present embodiment, a length of the signal line 33 is 10 cm or less. According to the present embodiment, it is possible to reliably prevent the interference of communication between the NFC circuit 31 and the wireless LAN circuit 32 due to the influence of noise.

According to the image forming apparatus 100 according to the present embodiment, the housing 21 is hinge-coupled to the main body 20 such that the posture can be changed. According to the present embodiment, even when the posture of the display operation part 19 is changed according to a height of the user's eyes, the wireless LAN connection between the portable terminal 40 and the image forming apparatus 100 can be performed using NFC.

The above embodiments may be modified as follows.

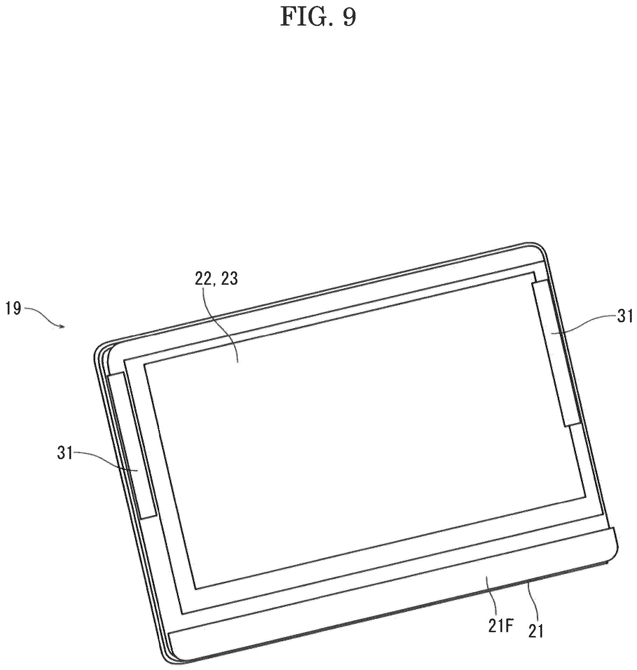

FIG. 9 is a perspective view showing a modified example of the above embodiment. In the above embodiment, the NFC circuit 31 is housed in the left portion of the housing 21, but the NFC circuit 31 may be provided at a plurality of positions in the left-and-right direction in the housing 21, and the control part 2 may perform communication using the NFC circuit 31 having the stronger received radio wave among the plurality of NFC circuits 31. According to this modified example, a sensitivity of reception can be improved. Further, since a left-handed user can hold the portable terminal 40 with his right hand and operate the portable terminal 40 and the display operation part 19 with his left hand, the operability is improved.

In the above embodiment, the display operation part 19 housed in the housing 21 is provided outside the main body housing 3, but the housing 21 may be embedded in the main body housing 3 with the front surface 21F (the surface provided with the display panel 22, the touch panel 23 and the keypad 24) exposed.

## Claims

1. An image forming apparatus (100) comprising:
a main body (20) which forms an image;
a display operation part (19) which displays information and receives operation;
a housing (21) which is coupled to a front surface of the main body (20) and houses the display operation part (19);
an NFC circuit (31) which performs NFC communication with a portable terminal (40);
a wireless LAN circuit (32) which performs wireless LAN communication with the portable terminal (40); and
a control part (2) which transmits and receives data to and from the portable terminal (40) via the wireless LAN circuit (32) after establishing a connection with the portable terminal (40) via the NFC circuit (31), wherein
the NFC circuit (31) is housed in a left portion of the housing (21).

2. The image forming apparatus (100) according to claim 1, wherein
the NFC circuit (31) is disposed on a left side of a screen of the display operation part (19).

3. The image forming apparatus (100) according to claim 1, wherein
the NFC circuit (31) is provided at a plurality of positions in a left-and-right direction in the housing (21), and
the control part (2) performs communication using the NFC circuit (31) having a strong received radio wave among the plurality of NFC circuits (31).

4. The image forming apparatus (100) according to claim 1, wherein
the NFC circuit (31) and the wireless LAN circuit (32) are connected by using a signal line (33) having a length enough to prevent communication interference due to an influence of noise generated from the main body (20).

5. The image forming apparatus (100) according to claim 4, wherein
a length of the signal line (33) is 10 cm or less.

6. The image forming apparatus (100) according to claim 1, wherein
the housing (21) is hinge-coupled to the main body (20) such that a posture can be changed.
